# EUROPÄISCHE PATENTSCHRIFT

(11) **EP 2 759 370 B1**
(45) Veröffentlichungstag und Bekanntmachung des Hinweises auf die Patenterteilung: **30.11.2016**
(21) Anmeldenummer: 14152884.4
(22) Anmeldetag: 28.01.2014
(51) Int. Cl.: B23Q 1/00

(54) **Spannsystem, insbesondere Nullpunktspannsystem, und Ausgleichspannbolzen**
Clamping system, in particular zero point clamping system, and compensating clamping bolt
Système de serrage, notamment système de serrage au point zéro, et boulon de serrage de compensation

(30) Priorität: 28.01.2013 DE 102013201310
(43) Veröffentlichungstag der Anmeldung: 30.07.2014
(60) Teilanmeldung: 16155809.3
(73) Patentinhaber: Schunk GmbH & Co. KG Spann- und Greiftechnik, 74348 Lauffen am Neckar (DE)
(72) Erfinder: Ebe, Frank, 88499 Riedlingen (DE); Koch, Alexander, 88512 Mengen (DE)
(74) Vertreter: DREISS Patentanwälte PartG mbB

(56) Entgegenhaltungen:
- EP-A1- 0 858 861
- EP-A1- 1 321 221
- EP-A1- 2 371 479
- DE-A1- 10 249 241
- DE-A1-102006 037 709

## Beschreibung

Die Erfindung betrifft ein Spannsystem, insbesondere ein Nullpunktspannsystem, mit zwei oder mehreren, jeweils wenigstens ein verlagerbares Verriegelungselement aufweisenden Spannaufnahmen und mit zwei oder mehreren an einem Werkstück anordenbaren, in die Spannaufnahmen einführbaren Spannbolzen. Die Spannbolzen und die Spannaufnahmen sind dabei derart angeordnet, dass die einzelnen Spannbolzen in die ihnen jeweils zugeordneten Spannaufnahmen einführbar sind und dort mittels der Verriegelungselemente in einer Verriegelungslage verriegelbar sind. Bei derartigen Spannsystemen handelt es sich in erster Linie um Nullpunktspannsysteme, mit denen zu bearbeitende Werkstücke wiederholbar positionsgenau gespannt werden können. Entweder können dabei die Werkstücke als solche die Spannbolzen aufweisen. Andererseits ist auch denkbar, dass die zu bearbeitenden Werkstücke auf Spannplatten oder auf Spannmodulen angeordnet sind, die dann die Spannbolzen aufweisen. Die einzelnen Spannaufnahmen sind dabei vorzugsweise auf einem gemeinsamen Träger, beispielsweise auf einem Tisch oder einer Platte, angeordnet.

Die Erfindung betrifft außerdem die Ausgestaltung eines Spannbolzens des Spannsystems.

Spannsysteme beziehungsweise Spannaufnahmen und zugehörige Spannbolzen sind insbesondere aus der DE 10 2010 007 924 A1 oder der DE 10 2010 013 912 A1 vorbekannt. Die Spannbolzen sind hier als Einzugsspannbolzen ausgebildet, die einen konusflächigen Angriffsabschnitt aufweisen gegen den die Verriegelungselemente derart wirken, dass der Bolzen beim Verriegeln in die Spannaufnahme eingezogen wird.

Zur Bearbeitung von größeren Werkstücken, wie beispielsweise Zylinderblöcke von Verbrennungsmotoren, werden in der Regel mehr als drei Spannbolzen verwendet, die dann in den jeweiligen Spannaufnahmen verriegelt werden.

Beim Spannen eines Werkstücks oder eines Aufspannmoduls mit mehr als drei Spannvorrichtungen entsteht regelmäßig auf Grund von Fertigungstoleranzen oder thermischen Ausdehnungen des Werkstücks eine mechanische Überbestimmung, was zu mechanischen Spannungen im Werkstück beziehungsweise im gesamten Spannsystem führen kann. Dabei ist bei der Bearbeitung von größeren Werkstücken oder der Anordnung von größeren Werkstücken an größeren Aufspannmodulen oder Spannplatten gerade eine thermische Ausdehnung problematisch. Eine Erwärmung des Werkstücks kann insbesondere auf Grund einer entsprechenden Bearbeitung erfolgen. Die thermische Ausdehnung kann dabei im 1/10 bis 1/1 Millimeterbereich liegen. Dies kann zur Folge haben, dass insbesondere unter Verwendung von mehr als drei Spannbolzen die Spannbolzen dann nicht zentrisch in die Spannaufnahmen einführbar sind. Neben einem Höhenversatz kann folglich auch ein Radialversatz auftreten, der zu einer mechanischen Überbestimmung führt, woraus mechanische Spannungen im Werkstück oder dem Spannmodul beziehungsweise der Spannplatte führt.

Aus der DE 20 2009 006 429 U1 ist es beispielsweise in diesem Zusammenhang vorbekannt, eine Höhenanpassung mittels entsprechend hohen Ausgleichsadaptern zu ermöglichen. Die EP 2 353 774 B1 schlägt vor, einen Höhenausgleich an der Spannvorrichtung vorzusehen.

Der vorliegenden Erfindung liegt die Aufgabe zu Grunde, ein eingangs genanntes Spannsystem bereitzustellen, bei dem mehrere Spannbolzen in ihnen jeweils zugeordneten, mehreren Spannaufnahmen gespannt werden können, wobei eine mechanische Überbestimmung vermieden werden soll. Das Spannsystem soll dabei vergleichsweise einfach aufgebaut sein und wenig Bauraum beanspruchen.

Diese Aufgabe wird mit einem Spannsystem mit den Merkmalen des Anspruchs 1 gelöst. Das Spannsystem zeichnet sich folglich dadurch aus, dass wenigstens ein Spannbolzen als Ausgleichsspannbolzen ausgebildet ist, der ein Halteelement mit einer zylindrischen

Außenoberfläche zur Anlage des wenigstens einen Verriegelungselements derart aufweist, dass der Ausgleichsspannbolzen beim Verlagern des wenigstens einen Verriegelungselements in die Verriegelungslage nicht in die Spannaufnahme eingezogen wird.

Anders als bei den vorbekannten Spannbolzen, wie sie beispielsweise in der DE 10 2010 013 912 A1 oder der DE 10 2010 007 924 A1 gezeigt sind, finden also Ausgleichsspannbolzen Verwendung, die beim Verlagern der Verriegelungselemente in die Verriegelungslage nicht nach axial unten eingezogen werden.

Dadurch ist es möglich, trotz eines axialen Höhenversatz der Spannbolzen, der insbesondere thermisch bedingt sein kann, das Werkstück positionsgenau zu spannen, wobei aus einem solchen Höhenversatz resultierende Spannungen im Werkstück vermieden oder zumindest verringert werden können.

Anders als bei den vorbekannten Spannbolzen, wie sie beispielsweise in der DE 10 2010 013 912 A1 oder der DE 10 2010 007 924 A1 gezeigt sind, finden also Ausgleichsspannbolzen Verwendung, die beim Verlagern der Verriegelungselemente in die Verriegelungslage einen Ausgleich in radialer Richtung zulassen.

Dadurch wird es möglich, dass trotz eines Versatzes der Abstände der einzelnen Spannbolzen zueinander, der insbesondere thermisch bedingt sein kann, das Werkstück positionsgenau zu spannen, wobei aus einem solchen Abstandsversatz resultierende Spannungen im Werkstück vermieden oder zumindest verringert werden können.

Die bewegliche Verlagerbarkeit des Halteelements bezüglich des Bolzenkerns in radialer Richtung ist dabei insbesondere so gewählt, dass sie größer ist als ein denkbarer unerwünschter Abstandsversatz der Spannbolzen aufgrund einer thermische Ausdehnung des Werkstücks beziehungsweise des Aufspannmoduls oder der Spannplatte. Insofern kann sichergestellt werden, dass ein wiederholgenaues Spannen des Werkstücks möglich wird, ohne dass unerwünschte, interne Spannungen auftreten.

Folglich sind wenigstens ein vorbekannter Einzugsspannbolzen sowie wenigstens ein neuartiger Ausgleichsspannbolzen vorgesehen. Vorteilhafterweise werden bei größeren Werkstücken drei Einzugsspannbolzen sowie wenigstens ein weiterer, und insbesondere zwei bis drei weitere Ausgleichsspannbolzen verwendet. Dadurch, dass neben herkömmlichen, starr ausgebildeten Spannbolzen, die zu einer positionsgenauen Spannung des Werkstücks in der Verriegelungslage führen, Ausgleichsspannbolzen mit entsprechenden Halteelement Verwendung finden, ist es möglich, die Werkstücke positionsgenau zu spannen, ohne dass eine mechanische Überbestimmtheit, und damit unerwünschte Spannungen im Werkstück, auftreten.

Vorteilhafterweise ist das Haltelement ringartig um den Bolzen umlaufend ausgebildet. In der Nichtspannlage ist das Halteelement insbesondere konzentrisch um die Mittellängsachse des Bolzens angeordnet und weist einen in radialer Richtung hin zum Bolzen weisenden Ausgleichsabstand auf, um den das Halteelement in der Verriegelungslage in radialer Richtung verlagerbar ist. Der Ausgleichsabstand kann dabei im Bereich zwischen 0,5 und 3 mm, und insbesondere im Bereich von 1 bis 2 mm liegen. Dadurch kann gewährleistet werden, dass das Halteelement sich in radialer Richtung gegenüber dem Bolzenkern ausreichend bewegen kann.

Das Haltelement weist eine zylindrische Außenoberfläche zur Anlage der Verriegelungselemente auf. Durch die zylindrische Außenoberfläche zur Anlage der Verriegelungselemente wird bei den Ausgleichsspannbolzen erreicht, dass sie beim Verlagern der Verriegelungselemente in der Verriegelungslage nicht nach axial unten eingezogen werden.

Um zu erreichen, dass das Haltelement in einer Nichtspannlage eine zum Bolzenkern konzentrische Lage einnimmt ist denkbar, dass zwischen dem Halteelement und dem Bolzenkern elastisch nachgiebige Ausgleichsmittel vorgesehen sind. Als Ausgleichsmittel kommen insbesondere gummielastische Elemente, wie um den Bolzenkern herumlaufende Gummiringe, in Betracht.

Insbesondere ist denkbar, dass das elastisch nachgiebige Ausgleichsmittel in einer Aussparung oder einer Nut verliersicher angeordnet ist.

Das Halteelement als solches kann am Bolzenkern insbesondere zwischen bolzenkernseitigen Schultern angeordnet sein. Dadurch wird das Halteelement in axialer Richtung am Bolzenkern positioniert. Dabei kann der Bolzenkern ein Grundteil und ein T- oder pilzförmig ausgebildetes Kopfteil umfassen, wobei eine Schulter vom Grundteil und eine Schulter vom Kopfteil gebildet werden. Das Kopfteil kann dabei mit dem Grundteil über eine Sicherungsschraube gefügt sein. Die Sicherungsschraube kann dabei insbesondere das Grundteil in axialer Richtung durchdringen und beispielsweise unmittelbar in das Werkstück eingeschraubt sein. Die Sicherungsschraube kann allerdings auch in ein Aufspannmodul oder in eine Spannplatte eingeschraubt sein.

Das axiale Abstandsmaß der beiden Schultern ist dabei so gewählt, dass es geringfügig größer ist als die Breite des Halteelements. Dadurch wird gewährleistet, dass das Halteelement in radialer Richtung gegenüber dem Bolzenkern beweglich ist, ohne das es an den Schultern verkantet oder verklemmt.

Das Halteelement kann zudem im Bereich seiner umlaufenden Außenkanten Anfasungen aufweisen, wobei an oder in diesen Anfasungen umlaufende Dichtelemente vorgesehen sein können. Hierdurch kann vermieden werden, dass unerwünschte Medien in den Bereich zwischen dem Halteelement und dem Bolzenkern gelangen können.

Ferner ist denkbar, dass der Bolzenkern den Anfasungen in axialer Richtung gegenüberliegende Gegenanfasungen aufweisen kann, die insbesondere spiegelsymmetrisch zu den Anfasungen ausgebildet sind. Die umlaufenden Dichtelemente können dann in einer Einkerbung liegen, die von der jeweiligen Anfasung und der jeweiligen Gegenanfasung gebildet wird.

Die eingangs genannte Aufgabe wird auch durch ein Ausgleichsspannbolzen gemäß Anspruch 12

Der Ausgleichsspannbolzen kann dabei sämtliche Merkmale aufweisen, wie sie im Zusammenhang mit dem Spannsystem beschrieben sind.

Weitere Ausgestaltungen und Einzelheiten der Erfindung sind den Figuren und der nachfolgenden Beschreibung zu entnehmen, anhand derer ein Ausführungsbeispiel der Erfindung näher beschrieben und erläutert sind.

Es zeigen:
- Figur 1: ein Werkstück mit Spannbolzen von schräg unten;
- Figur 2: das Werkstück gemäß Figur 1, eingespannt mit einem Spannsystem gemäß der Erfindung;
- Figur 3: einen Ausgleichsspannbolzen in Einzelteildarstellung;
- Figur 4: einen Längsschnitt durch den Ausgleichsspannbolzen gemäß Figur 3 samt Verriegelungselement, und
- Figur 5: eine Vergrößerung eines Ausschnitts aus Figur 4.

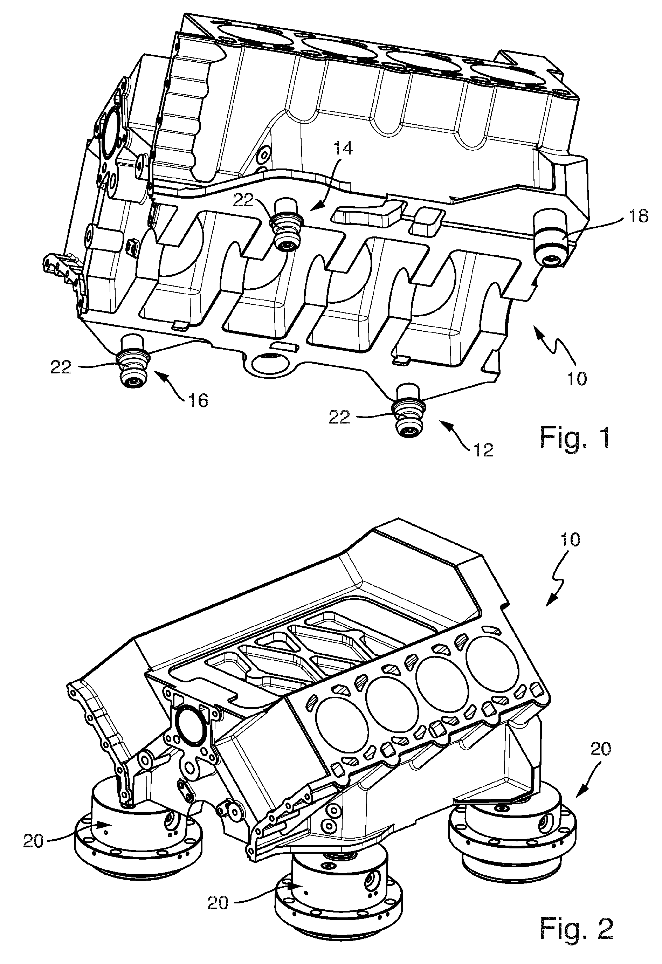

In der Figur 1 ist ein Werkstück 10 in Form eines Zylinderblockes gezeigt, an dem insgesamt vier Spannbolzen 12, 14, 16, 18 zum positionsgenauen Spannen des Werkstücks vorgesehen sind.

In Figur 2 ist das Werkstück 10 in einem eingespannten Zustand dargestellt. Die insgesamt vier Spannbolzen 12, 14, 16, 18 sind dazu jeweils in einer ihnen zugeordneten Spannaufnahme 20 verriegelt.

Wie aus Figur 1 deutlich wird, sind die Spannbolzen 12, 14, 16, 18 unmittelbar am Werkstück angeordnet. Alternativ dazu ist möglich, dass die Spannbolzen an einem Spannmodul oder einer Spannplatte angeordnet sind, an welcher das zu bearbeitende Werkstück angebracht ist.

Die in Figur 2 dargestellten Spannaufnahmen 20 sind auf einem nicht dargestellten Grundmodul, insbesondere einer Grundplatte angeordnet. Die Grundplatte mit den Spannaufnahmen 20 bildet dann im vorliegenden Fall eine 4-fach Spannstation, da insgesamt vier Spannaufnahmen 20 vorgesehen sind.

Die einzelnen Spannaufnahmen 20 sehen Verriegelungselemente vor, die insbesondere in radialer Richtung aus einer Entriegelungslage in eine Verriegelungslage verlagerbar sind. In der radial äußeren Entriegelungslage ist es möglich, die Spannbolzen 12, 14, 16 und 18 in die Spannaufnahmen einzuführen beziehungsweise aus den Spannaufnahmen herauszuführen. In der Verriegelungslage wirken die Verriegelungselemente mit den Spannbolzen zusammen.

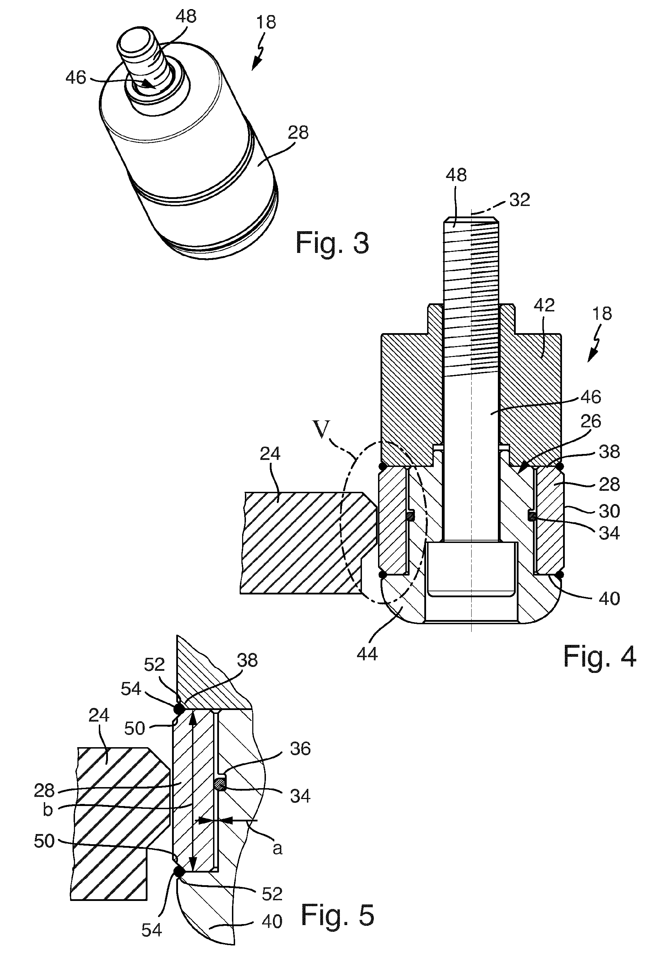

Dazu weisen die drei Spannbolzen 12, 14, 16 eine umlaufende Verriegelungsnut 22 auf, in welche die Verriegelungselemente, die beispielshaft in Figur 4 und 5 mit dem Bezugszeichen 24 gekennzeichnet sind, zur Verriegelung des Spannbolzens eintauchen.

Die Verriegelungselemente können, wie in Figur 4 und 5 dargestellt, als Verriegelungsschieber ausgebildet sein. Allerdings ist auch denkbar, dass die Verriegelungselemente beispielsweise als Verriegelungskugeln und/oder flexibel oder auch andersartig ausgebildet sind.

Die Spannbolzen 12, 14, 16 sind derart ausgebildet, dass sie im Zusammenspiel mit den Verriegelungselementen in die Spannaufnahmen eingezogen werden. Dies kann insbesondere durch eine Anfasung im Bereich der Nutschenkel beziehungsweise durch eine entsprechende Ausbildung der mit den Spannbolzen zusammenwirkenden Verriegelungselementen erreicht werden. Auf Grund der Tatsache, dass die Spannbolzen 12, 14, 16 beim Verriegeln in die Spannaufnahme eingezogen werden, werden sie im nachfolgenden als Einzugsspannbolzen bezeichnet. Derartige Einzugsspannbolzen 12, 14, 16 sind beispielsweise in der DE 10 2010 013 912 A1 ausführlich beschrieben. Insgesamt ist es vorteilhaft, wenn zwei oder drei Verriegelungselemente 24 in einer Spannaufnahme 20 vorgesehen sind. Diese Verriegelungselemente werden vorzugsweise synchron in radialer Richtung verlagert, wie es beispielsweise in der DE 10 2010 010 898 B4 beschrieben ist.

Der Spannbolzen 18 unterscheidet sich von den Einzugsspannbolzen 12, 14, 16 dadurch, dass er als Ausgleichsspannbolzen ausgebildet ist, der einen Bolzenkern 26 umfasst, der in dem Bereich, in dem die Verriegelungselemente 24 gegen ihn wirken, ein am Bolzenkern 26 in radialer Richtung beweglich angeordnetes Halteelement 28 aufweist.

Wie aus den Figuren 3, 4 und 5 deutlich wird, ist das Halteelement 28 ringartig um den Bolzenkern 26 umlaufend ausgebildet. In der Nichtspannlage, also dann, wenn die jeweiligen Verriegelungselemente 24 nicht gegen das Halteelement 28 wirken, weist das Halteelement 28 in radialer Richtung hin zum Bolzenkern 26 einen vorzugsweise umlaufenden gleichmäßigen Ausgleichsabstand a auf, um den das Halteelement in der Verriegelungslage in radialer Richtung verlagerbar ist. Der Verriegelungsabstand a ist insbesondere in Figur 5 deutlich zu erkennen und beträgt insbesondere einen Wert zwischen 0,5 mm und 2, 5 mm und insbesondere zwischen 1 mm und 2 mm.

Das Halteelement 28 ist, wie ebenfalls aus Figur 5 deutlich wird, im Wesentlichen kreisringzylindrisch ausgebildet und weist eine zylindrische Außenoberfläche 30 auf, gegen welche die Verriegelungselemente 24 in der Verriegelungslage wirken. Dadurch, dass die Außenoberfläche 30 zylindrisch ausgebildet ist, und keine Verriegelungsnut 22, wie sie bei den Einzugsspannbolzen 12, 14, 16 vorgesehen ist, wird erreicht, dass beim Verlagern der Verriegelungselemente 24 in die Verriegelungslage der Spannbolzen 18 nicht in die Spannaufnahme eingezogen wird. Dabei führt ein auftretender Höhenversatz der Spannbolzen nicht zu unerwünschten Spannungen, da beim Bewegen der Verriegelungselemente 24 in die Verriegelungslage der Ausgleichsspannbolzen 18 auf Grund der zylindrischen Oberfläche 30 des Halteelements 28 nicht in die jeweilige Spannaufnahme 20 eingezogen wird.

Dadurch, dass das Halteelement 28 in radialer Richtung beweglich angeordnet ist, kann beim Spannen des Werkstücks 10 mit mehreren Spannaufnahmen 20 eine mechanische Überbestimmung vermieden werden. Insbesondere dann, wenn das Werkstück 10 unterschiedlichen Temperaturen ausgesetzt ist, können thermisch bedingte Dehnungen und damit radiale Abstandsversätze zwischen den Spannbolzen entstehen, welche durch die Verwendung von wenigstens einem Ausgleichsspannbolzen 18 ausgeglichen werden können. Beim Beaufschlagen des Haltelements 28 mit den Verriegelungselementen 24 kann dieses aus seiner zur Mittellängsachse 32 des Ausgleichsspannbolzens 18 konzentrischen Lage in eine exzentrische Lage, und zwar um das Abstandsmaß a, ausweichen.

Insgesamt kann damit sowohl ein radialer Versatz als auch ein Höhenversatz ausgeglichen werden. Dennoch kann das Werkstück 10 positionsgenau gespannt werden, insbesondere auf Grund des Vorsehens der Einzugsspannbolzen 12, 14, 16, wobei der Ausgleichsspannbolzen die Spannung des Werkstücks 10 insgesamt unterstützt.

Figur 4 und 5 zeigen das Verriegelungselement 24 in der Position kurz bevor es mit dem Halteelement 28 zusammenwirkt. Das Verriegelungselement 24 ist folglich zum Halteelement 28 noch beabstandet.

Aus Figur 4 und 5 wird deutlich, dass zwischen dem Halteelement 28 und dem Bolzenkern 26 ein elastisch nachgiebiges Ausgleichsmittel 34 in Form eines umlaufenden Gummiringes vorgesehen ist. Der umlaufende Gummiring befindet sich dabei etwa im mittleren Bereich des Halteelements 28 und ist in einer am Bolzenkern 26 vorgesehenen umlaufenden Nut 36 angeordnet. Die Nuttiefe ist dabei so gewählt, dass diese kleiner ist als der Durchmesser des Ausgleichsmittels 34. Dadurch wird gewährleistet, dass eine Verlagerung des Halteelements 28 um den Abstand a möglich wird. Das Ausgleichsmittel 34 ist zudem verliersicher in der Nut 36 untergebracht. Bei der in der Figur dargestellten Ausführungsform ist lediglich ein Ausgleichsmittel 34 vorgesehen. Denkbar ist, dass weitere Ausgleichsmittel 34, insbesondere parallel zueinander verlaufende Gummiringe, Verwendung finden. Auf Grund des Vorsehens des elastischen Ausgleichsmittels 34 wird zudem erreicht, dass das Haltelement 28 beim Verlagern der Verriegelungselemente 24 in ihre Nichtspannlage das Haltelement 28 in die zur Mittellängsachse 32 konzentrisch verlaufende Ausgangsposition rückbewegt werden kann.

Aus den Figuren 4 und 5 wird ferner deutlich, dass das Halteelement 28 in axialer Richtung zwischen bolzenkernseitigen Schultern 38 und 40 angeordnet ist. Das Abstandsmaß der beiden Schultern 38 und 40 ist dabei vorzugsweise so gewählt, dass es wenigstens geringfügig größer ist als die in axialer Richtung verlaufende Breite b des Halteelements 28. Dadurch soll eine leichtgängige Bewegung des Halteelements 28 in radialer Richtung gewährleistet werden.

Bei der in den Figuren 4 und 5 dargestellten Ausführungsform wird der Bolzenkern 26 von einem dem Werkstück 10 zugewandten Grundteil 42 und einem dem Werkstück 10 abgewandten pilzförmigen Kopfteil 44 gebildet. Die Schulter 38 wird hierbei vom Grundteil 42 gebildet; die Schulter 40 wird vom Kopfteil 44 gebildet. Wie aus Figur 4 deutlich wird ist eine zentrale Befestigungsschraube 46 vorgesehen, welche das Kopfteil 44 und das Grundteil 42 entlang deren Mittellängsachse 32 durchdringt. Das freie Ende 48 der Schraube 46 weist ein Gewinde auf, welches bei der in den Figuren dargestellten Ausführungsform unmittelbar in eine werkstückseitige Gewindeöffnung eingeschraubt werden kann, wie es in Figur 1 gezeigt ist.

Bei der Ausführungsform gemäß Figur 4 und 5 ist zudem vorgesehen, dass das Halteelement 28 im Bereich seiner umlaufenden Außenkanten Anfasungen 50 vorsieht und dass die den Anfasungen 50 gegenüberliegenden Schultern 38, 40 jeweils den Anfasungen 50 gegenüberliegende Gegenanfasungen 52 vorsehen. In den von den Anfasungen 50 und den Gegenanfasungen 52 gebildeten kerbartigen, umlaufenden Ringnuten sind ebenfalls umlaufende Dichtelemente 54, insbesondere Gummiringe, vorgesehen, um die zwischen den jeweiligen Schultern 38, 40 und dem Halteelement 28 liegende Spalte abzudecken und vor dem Eindringen von Flüssigkeit oder Medien zu schützen.

Bei dem in der Figur gezeigten Ausführungsbeispiel sind insgesamt drei Einzugsspannbolzen 12, 14, 16 und lediglich ein Ausgleichsspannbolzen 18 vorgesehen. Je nach Größe des zu spannenden Werkstückes 10 ist allerdings denkbar, dass auch eine größere Anzahl von insbesondere Ausgleichsspannbolzen 18 verwendet werden können.

Die Erfindung hat den Vorteil, dass trotz Verwendung von zwei oder drei Einzugsspannbolzen ein vergleichsweise großes Werkstück gespannt werden kann, ohne dass eine mechanische Überbestimmung auftritt, welche zu unerwünschten Spannungen im Werkstück beziehungsweise im gesamten Spannsystem führen kann. Das Vorsehen der Ausgleichsspannbolzen führt dazu, dass insbesondere thermische Längenausdehnungen in radialer Richtung und zudem auch in axialer Richtung ausgeglichen werden können, wobei dennoch ein sicheres Spannen möglich ist.

## Patentansprüche

1. Spannsystem, insbesondere Nullpunktspannsystem, mit zwei oder mehreren, jeweils wenigstens ein verlagerbares Verriegelungselement (24) aufweisenden Spannaufnahmen (20) und mit zwei oder mehreren an einem Werkstück anordenbaren, in die Spannaufnahmen einführbaren Spannbolzen (12, 14, 16, 18), wobei die Spannbolzen (12, 14, 16, 18) in den Spannaufnahmen (20) mittels den Verriegelungselementen (24) in einer Verriegelungslage verriegelbar sind, wobei wenigstens ein Spannbolzen (12, 14, 16) als Einzugsspannbolzen mit einer umlaufenden Verriegelungsnut (22) ausgebildet ist, wobei das wenigstens eine Verriegelungselement (24) beim Verlagern in die Verriegelungslage derart gegen die Verriegelungsnut (22) wirkt, dass der Einzugsspannbolzen in die Spannaufnahme (20) eingezogen wird, **dadurch gekennzeichnet, dass** wenigstens ein Spannbolzen (18) als Ausgleichsspannbolzen ausgebildet ist, der ein Halteelement (28) mit einer zylindrischen Außenoberfläche (30) zur Anlage des wenigstens einen Verriegelungselements (24) derart aufweist, dass der Ausgleichsspannbolzen (18) beim Verlagern des wenigstens einen Verriegelungselements (24) in die Verriegelungslage nicht in die Spannaufnahme (20) eingezogen wird.

2. Spannsystem, nach Anspruch 1, **dadurch gekennzeichnet, dass** der Ausgleichsspannbolzen einen Bolzenkern (26) und in dem Bereich, in dem das wenigstens eine Verriegelungselement (24) in der Verriegelungslage gegen den Ausgleichsspannbolzen (18) wirkt, ein am Bolzenkern (26) in radialer Richtung beweglich angeordnetes Halteelement (28) aufweist, sodass beim Verlagern des Verriegelungselements (24) in die Verriegelungslage ein Ausgleich ist radialer Richtung ermöglicht ist.

3. Spannsystem nach Anspruch 1 oder 2, **dadurch gekennzeichnet, dass** das Halteelement (28) ringartig um den Bolzenkern (26) umlaufend derart ausgebildet ist, dass das Halteelement (28) in der Nichtspannlage in radialer Richtung hin zum Bolzenkern (26) einen Ausgleichsabstand (a) aufweist, um den das Halteelement (28) in der Verriegelungslage in radialer Richtung verlagerbar ist.

4. Spannsystem nach einem der vorherigen Ansprüche, **dadurch gekennzeichnet, dass** das Halteelement (28) kreisringzylindrisch ausgebildet ist.

5. Spannsystem nach einem der vorherigen Ansprüche, **dadurch gekennzeichnet, dass** zwischen dem Halteelement (28) und dem Bolzenkern (26) wenigstens ein elastisch nachgiebiges Ausgleichsmittel (34) vorgesehen ist.

6. Spannsystem nach Anspruch 5, **dadurch gekennzeichnet, dass** das elastisch nachgiebige Ausgleichsmittel (34) in einer Aussparung oder ein einer Nut (36) verliersicher angeordnet ist.

7. Spannsystem nach einem der vorherigen Ansprüche, **dadurch gekennzeichnet, dass** das Halteelement (28) in axialer Richtung zwischen bolzenkernseitigen Schultern (38, 40) angeordnet ist.

8. Spannsystem nach Anspruch 7, **dadurch gekennzeichnet, dass** der Bolzenkern (26) ein Grundteil (42) und ein T- oder pilzförmig ausgebildetes Kopfteil (44) umfasst, wobei eine Schulter (38) vom Grundteil (42) und eine Schulter (40) vom Kopfteil (44) gebildet wird.

9. Spannsystem nach Anspruch 7 oder 8, **dadurch gekennzeichnet, dass** das axiale Abstandsmaß der beiden Schultern (38, 40) geringfügig größer ist als die Breite (b) des Halteelements.

10. Spannsystem nach einem der vorherigen Ansprüche, **dadurch gekennzeichnet, dass** das Halteelement (28) im Bereich seiner umlaufenden Außenkanten Anfasungen (50) aufweist und dass an oder in diesen Anfasungen umlaufende Dichtelemente (54) vorgesehen sind.

11. Spannsystem nach einem der vorherigen Ansprüche, **dadurch gekennzeichnet, dass** der Bolzenkern (26), oder wenn auf Anspruch 6 rückgezogen das Grundteil (42) und/oder Kopfteil (44), den Anfasungen (50) in axialer Richtung gegenüberliegende Gegenfasungen (52) aufweist.

12. Ausgleichspannbolzen (18) eines Spannsystems nach einem der vorherigen Ansprüche, umfassend einen Bolzenkern (26) und eine umlaufende Verriegelungsnut (22) und in dem Bereich, in dem das wenigstens eine Verriegelungselemente (24) gegen den Ausgleichsspannbolzen (18) wirkt, ein am Bolzenkern in der umlaufenden Verriegelungsnut (22) angeordnetes Halteelement (28), welches eine zylindrische Außenoberfläche (30) zur Anlage der Verriegelungselemente (24) derart aufweist, dass der Ausgleichsspannbolzen (18) beim Verlagern der Verriegelungselemente (24) in die Verriegelungslage nicht in die Spannaufnahme (20) eingezogen wird und/oder welches in radialer Richtung beweglich am Bolzenkern (26) angeordnet ist.

## Claims

1. A clamping system, in particular a zero-point clamping system, having two or more clamping receptacles (20) each comprising at least one mobile locking member (24) and having two or more clamping pins (12, 14, 16, 18) disposable on a workpiece and insertable into the clamping receptacles, wherein the clamping pins (12, 14, 16, 18) in the clamping receptacles (20) are lockable in a locking position by means of the locking members (24), wherein at least one clamping pin (12, 14, 16) is configured as a draw-in clamping pin having a circumferential locking groove (22), wherein the at least one locking member (24), when moving to the locking position, acts against the locking groove (22) such that the draw-in clamping pin is drawn into the clamping receptacle (20), **characterized in that** at least one clamping pin (18) is configured as an equalizing clamping pin that comprises a retaining member (28) having a cylindrical outer surface (30) to contact the at least one locking member (24) such that the equalizing clamping pin (18) is not drawn into the clamping receptacle (20) when the at least one locking member (24) moves to the locking position.

2. Clamping system according to Claim 1, **characterized in that** the equalizing clamping pin comprises a pin core (26) and, in the area where the at least one locking member (24) in the locking position acts against the equalizing clamping pin (18), a retaining member (28) disposed movably in the radial direction on the pin core (26) so that an equalization in the radial direction is enabled when the locking member (24) moves to the locking position.

3. Clamping system according to Claim 1 or 2, **characterized in that** the retaining member (28) is configured so as to be circumferential about the pin core (26) in a ring-like manner such that the retaining member (28) in the non-clamping position comprises an equalizing distance (a) in the radial direction towards the pin core (26) by which distance the retaining member (28) in the locking position is mobile in the radial direction.

4. Clamping system according to any of the preceding claims, **characterized in that** the retaining member (28) has a circular-ring cylinder configuration.

5. Clamping system according to any of the preceding claims, **characterized in that** at least one resilient equalizing means (34) is provided between the retaining member (28) and the pin core (26).

6. Clamping system according to Claim 5, **characterized in that** the resilient equalizing means (34) is disposed in a recess or a groove (36) in a captive manner.

7. Clamping system according to any of the preceding claims, **characterized in that** the retaining member (28) is disposed in the axial direction between pin-core-side shoulders (38, 40).

8. Clamping system according to Claim 7, **characterized in that** the pin core (26) includes a base portion (42) and a head portion (44) in a Tee-shaped or mushroom-shaped configuration, wherein a shoulder (38) is formed by the base portion (42) and a shoulder (40) by the head portion (44).

9. Clamping system according to Claim 7 or 8, **characterized in that** the axial distance of the two shoulders (38, 40) is slightly greater than the width (b) of the retaining member.

10. Clamping system according to any of the preceding claims, **characterized in that** the retaining member (28) comprises chamfers (50) in the area of its circumferential outer edges and **in that** circumferential sealing members (54) are provided at or in these chamfers.

11. Clamping system according to any of the preceding claims, **characterized in that** the pin core (26) or, as appended to Claim 6, the base portion (42) and/or head portion (44) comprises counter-chamfers (52) opposite to the chamfers (50) in the axial direction.

12. Equalizing clamping pin (18) of a clamping system according to any of the preceding claims, including a pin core (26) and a circumferential locking groove (22) and, in the area where the at least one locking member (24) acts against the equalizing clamping pin (18), a retaining member (28) disposed in the circumferential locking groove (22) on the pin core, which comprises a cylindrical outer surface (30) to contact the locking members (24) such that the equalizing clamping pin (18) is not drawn into the clamping receptacle (20) when the locking members (24) move to the locking position and/or which is disposed movably in the radial direction on the pin core (26).

## Revendications

1. Système de serrage, en particulier système de serrage au point zéro, comprenant deux logements de serrage ou plus (20) présentant chacun un élément de verrouillage (24) mobile, et comprenant deux boulons de serrage ou plus (12, 14, 16, 18) pouvant être introduits dans les logements de serrage pouvant être agencés sur une pièce à usiner, les boulons de serrage (12, 14, 16, 18) pouvant être verrouillés dans une position de verrouillage dans les logements de serrage (20) à l'aide des éléments de verrouillage (24), au moins un boulon de serrage (12,14, 16) étant réalisé sous la forme d'un boulon de serrage à enfoncer avec une rainure de verrouillage (22) périphérique, ledit au moins un élément de verrouillage (24), lorsqu'il est déplacé en position de verrouillage, agissant contre la rainure de verrouillage (22), de sorte que le boulon de serrage à enfoncer s'enclenche dans le logement de serrage (20), **caractérisé en ce qu'**au moins un boulon de serrage (18) est réalisé sous la forme d'un boulon de serrage de compensation qui présente un élément de retenue (28) avec une surface extérieure cylindrique (30) pour installer ledit au moins un élément de verrouillage (24) de telle façon que le boulon de serrage de compensation (18), lorsque l'on déplace ledit au moins un élément de verrouillage (24) dans la position de verrouillage n'est pas amené dans le logement de serrage (20).

2. Système de serrage selon la revendication 1, **caractérisé en ce que** le boulon de serrage de compensation présente un noyau de boulon (26) et, dans la zone dans laquelle ledit au moins un élément de verrouillage (24), en position de verrouillage, agit contre le boulon de serrage de compensation (18), un élément de retenue (28) agencé sur le noyau de boulon (26) mobile dans le sens radial, de sorte que, lorsque l'on déplace l'élément de verrouillage (24) en position de verrouillage, une compensation est possible dans le sens radial.

3. Système de serrage selon la revendication 1 ou 2, **caractérisé en ce que** l'élément de retenue (28) présente une forme annulaire autour du noyau de boulon (26) de sorte que l'élément de retenue (28) en position non serrée présente une distance de compensation (a) dans le sens radial vers le noyau de boulon (26) pour amener l'élément de retenue (28) en position de verrouillage dans le sens radial.

4. Système de serrage selon l'une des revendications précédentes, **caractérisé en ce que** l'élément de retenue (28) est réalisé de forme cylindrique annulaire.

5. Système de serrage selon l'une des revendications précédentes, **caractérisé en ce qu'**il est prévu entre l'élément de retenue (28) et le noyau de boulon (26) au moins un moyen de compensation (34) élastiquement déformable.

6. Système de serrage selon la revendication 5, **caractérisé en ce que** le moyen de compensation élastiquement déformable (34) est agencé de façon imperdable dans un évidement ou dans une rainure (36).

7. Système de serrage selon l'une des revendications précédentes, **caractérisé en ce que** l'élément de retenue (28) est agencé dans le sens axial entre les épaulements côté noyau de boulon (38, 40).

8. Système de serrage selon la revendication 7, **caractérisé en ce que** le noyau de boulon (26) comprend une partie de base (42) et une partie de tête (44) réalisée en forme de T ou de champignon, un épaulement (38) étant formé par la partie de base (42) et un épaulement (40) étant formé par la partie de tête (44).

9. Système de serrage selon la revendication 7 ou 8, **caractérisé en ce que** l'écartement axial des deux épaulements (38, 40) est légèrement supérieur à la largeur (b) de l'élément de retenue.

10. Système de serrage selon l'une des revendications précédentes, **caractérisé en ce que** l'élément de retenue (28) présente dans la zone de ses bords extérieurs des chanfreins (50), et **en ce qu'**il est prévu au niveau, ou dans ces chanfreins, des éléments d'étanchéité tournants (54).

11. Système de serrage selon l'une des revendications précédentes, **caractérisé en ce que** le noyau de boulon (26), ou lorsque l'on se reporte à la revendication 6, la partie de base (42) et/ou la partie de tête (44), présente des contre-chanfreins (52) opposés aux chanfreins (50) dans le sens axial.

12. Boulon de serrage de compensation (18) d'un système de serrage selon l'une des revendications précédentes, comprenant un noyau de boulon (26) et, dans la zone dans laquelle ledit au moins un élément de verrouillage (24) agit contre le boulon de serrage de compensation (18), un élément de retenue (28) agencé au niveau du noyau de boulon dans la rainure de verrouillage périphérique (22), lequel élément de retenue présente une surface extérieure cylindrique (30) pour l'installation des éléments de verrouillage (24), de sorte que le boulon de serrage de compensation, lorsque l'on déplace les éléments de verrouillage (24) en position de verrouillage, n'est pas amené dans le logement de serrage (20) et/ou lequel est agencé sur le noyau de boulon (26) mobile dans le sens radial.
